# EUROPÄISCHE PATENTSCHRIFT

(11) **EP 2 743 671 B1**
(45) Veröffentlichungstag und Bekanntmachung des Hinweises auf die Patenterteilung: **19.08.2015**
(21) Anmeldenummer: 13004642.8
(22) Anmeldetag: 25.09.2013
(51) Int. Cl.: G01N 15/06

(54) **Sensor und Messanordnung zur Erfassung der Partikelkonzentration in einem Abgasstrom**
Sensor and measuring device for detecting the particle concentration in an exhaust gas stream
Capteur et agencement de mesure pour l'enregistrement de la concentration en particules dans un flux de gaz d'échappement

(30) Priorität: 12.12.2012 DE 102012024258
(43) Veröffentlichungstag der Anmeldung: 18.06.2014
(73) Patentinhaber: MAN Truck & Bus AG, 80995 München (DE)
(72) Erfinder: Kalaß, Rainer, 91189 Rohr (DE)

(56) Entgegenhaltungen:
- WO-A2-2011/156477
- DE-A1-102004 029 524
- DE-A1-102007 021 912
- DE-A1-102011 017 547
- DE-A1-102011 081 808
- US-A1- 2006 105 467
- US-A1- 2010 101 409

## Beschreibung

Die Erfindung betrifft einen Sensor zur Erfassung der Partikelkonzentration im Abgasstrom einer Brennkraftmaschine nach dem Oberbegriff des Anspruchs 1 sowie eine Messanordnung mit einem derartigen Sensor nach dem Patentanspruch 10.

Um unerwünschte Emissionen bei Brennkraftmaschinen, insbesondere bei in Kraftfahrzeugen angeordneten Brennkraftmaschinen, zu reduzieren, werden Partikelfilter verwendet, durch die der Abgasstrom hindurchgeführt wird. Im Partikelfilter kann sich ein Großteil der im Abgasstrom befindlichen Rußpartikel einlagern, wobei mittels Rußsensoren die Rußanlagerung überwacht werden kann. In periodischen Zeitabständen oder wenn eine vorgegebene maximale Rußmenge im Partikelfilter eingelagert ist, kann eine thermische Regeneration des Partikelfilters vorgenommen werden. Dabei werden die eingelagerten Rußpartikel verbrannt.

Aus der DE 10 2007 034 334 A1 ist ein Partikelfilter für Brennkraftmaschinen bekannt, in welchem wenigstens ein Sensor zur Bestimmung der angelagerten Rußpartikel vorgesehen ist. Dieser bekannte Sensor besteht aus wenigstens drei Elektroden, die zwischen sich Messfelder ausbilden, wobei mindestens ein Messfeld größer als ein anderes Messfeld ausgebildet ist. Die unterschiedliche Größe der Messfelder ergibt sich durch eine unterschiedliche Länge der parallel zueinander angeordneten Elektroden. Die zwischen den Elektroden angelagerte Menge an Rußpartikeln kann mittels einer Widerstandsmessung festgestellt werden, da der elektrische Widerstand zwischen den Elektroden von der angelagerten Menge an Rußpartikeln abhängig ist. Mit zunehmender Rußpartikelmenge zwischen den Elektroden verringert sich der elektrische Widerstand zwischen den Elektroden. Ein derartiger Sensor kann daher auch als resistives Sensorelement bezeichnet werden. Mit einem solchen Sensor ist es auch möglich, die Rußpartikelkonzentration in einem Abgasstrom stromab eines Partikelfilters zu bestimmen, um die Funktion des Partikelfilters zu überwachen.

WO 2011/156477 A2 lehrt ein Verfahren und ein System zum Reinigen eines Filters durch Entfernen von Asche. Der Filter wird hierbei Vibrationen ausgesetzt, die loses Material vom Filter löst.

DE 10 2007 021 912 A1 beschreibt einen Sensor und ein Verfahren zur Detektion von Teilchen in einem Gasstrom, umfassend ein Elektrodensystem mit mindestens zwei Elektroden und eine elektrisch leitfähige Schicht, wobei die elektrisch leitfähige Schicht mindestens zwei Elektroden des Elektrodensystems elektrisch leidend kontaktiert.

US 2010/0101409 A1 lehrt ein Partikelfilterkontrollsystem und ein Verfahren zur Kontrolle eines Partikelfiltersystems. Das System sieht eine Steuereinheit vor, um die Menge an in dem Partikelfilter angesammelten Materials auf der Basis der Menge des teilchenförmigen akkumulierten Materials in dem Partikelfilter, Defekte und Fehlfunktionen des Abgasnachbehandlungssystems und damit verbundener Komponenten zu bestimmen, und Gegenmaßnahmen zu ergreifen.

US 2006/0105467 A1 beschreibt einen Analysesensor für die Verschmutzung einer Flüssigkeit. Der Sensor detektiert eine definierte Verschmutzung innerhalb der Flüssigkeit durch Impendanzmessung der Flüssigkeit.

DE 10 2011 081 808 A1 lehrt eine Sensorsteuereinheit die eine an einem Feinstauberfassungssensor, der einen Anlagerungsabschnitt, an jedem leitfähiger Feinstaub (PM) in Abgas von einer Brennkraftmaschine angelagert und abgelagert wird und einen Erfassungsabschnitt umfasst. Der Erfassungsabschnitt wird durch ein Paar gegenüberliegender Elektroden konfiguriert und an dem Anlagerungsabschnitt angeordnet, wobei ein Erfassungssignal ausgegeben wird, das einem Widerstandswert zwischen dem Paar gegenüberliegender Elektroden entspricht.
DE 10 2011 017 547 A1 beschreibt einen Gassensor der fähig ist, eine Konzentration von PM zu erfassen, das in von einem Dieselmotor ausgestoßenem Abgas enthalten ist. Der Gassensor besteht aus einem Keramiksubstrat und Erfassungsteilen. Die Erfassungsteile weisen einen unterschiedlichen Erfassungsbereich auf. Ein Teil des Erfassungsbereichs von jedem der Erfassungsteile überlagert einander. Die Konzentration von in dem zu erfassenden Gas enthaltenen PM wird auf Basis der Änderung des Widerstandswerts erfasst.

Der Erfindung liegt die Aufgabe zugrunde, einen Sensor zur Erfassung der Partikelkonzentration in einem Abgasstrom anzugeben, der einen möglichst großen Messbereich und eine möglichst lange Gebrauchsdauer hat.

Die Lösung dieser Aufgabe gelingt mit den Merkmalen des Anspruchs 1. Besonders vorteilhafte Weiterbildungen sind Gegenstand der Unteransprüche.
Gemäß Anspruch 1 weist der Sensor wenigstens drei identisch ausgebildete Sensoreinheiten auf, von denen jede aus wenigstens zwei unterschiedlichen Sensorbereichen mit unterschiedlichen Elektrodenabständen besteht. Die unterschiedlichen Elektrodenabstände sind dabei so bemessen, dass sowohl geringere Anlagerungen von Rußpartikeln als auch größere Mengen von angelagerten Rußpartikeln messbar sind. Durch die Verwendung von wenigstens drei identisch ausgebildeten Sensoreinheiten mit derart unterschiedlichen Elektrodenabständen wird außerdem erreicht, dass Störungen oder Defekte im Bereich der Elektroden bzw. zwischen den Elektroden festgestellt werden können, indem die Sensorsignale der identisch ausgebildeten Sensoreinheiten miteinander verglichen werden. Werden dabei zu starke Signalabweichungen festgestellt, kann daraus auf eine vorliegende Störung oder einen vorliegenden Defekt geschlossen werden.

Der erfindungsgemäße Sensor besitzt somit einen großen Messbereich durch die unterschiedlichen Elektrodenabstände und besitzt außerdem eine längere Gebrauchsdauer, da ein Sensorbereich mit einem Defekt bei weiteren Messungen ignoriert werden kann und nur noch die Sensorsignale von Sensorbereichen ausgewertet werden, die keinen Defekt aufweisen.

In Übereinstimmung mit der Erfindung ist es, jede Sensoreinheit auf einem Trägerabschnitt eines nicht leitenden Trägers anzuordnen, wobei jeder Trägerabschnitt eine separat aktivierbare Regenerationseinrichtung zur Regeneration der auf ihm angeordneten Sensoreinheit hat. Dadurch ist es möglich, einzelne Sensoreinheiten zu regenerieren, während eine oder mehrere andere Sensoreinheiten im Messbetrieb arbeiten. Somit kann eine fortlaufende Messung der angelagerten Rußmenge durchgeführt werden, während einzelne Sensoreinheiten in Regenerationsphasen von den Anlagerungen befreit werden.

Als Regenerationseinrichtung kann jede Sensoreinheit mit einer separat betreibbaren Heizvorrichtung ausgerüstet sein, so dass in der Regenerationsphase angelagerte Rußpartikel durch Hitzeeinwirkung verbrannt werden.

Die Regenerationseinrichtung kann auch eine Schwingungseinrichtung zur Erzeugung niederfrequenter mechanischer Schwingungen umfassen, um angelagerte Rußpartikel oder andere nicht veraschbare Partikel "abschütteln" zu können.

Zur Durchführung einer Regenerationsphase kann die Regenerationseinrichtung auch mit einer Hochspannungseinrichtung zur Erzeugung hoher Spannungen zwischen den Elektroden der Sensoreinheiten ausgerüstet sein.

Die Trägerabschnitte des Trägers auf dem die Sensoreinheiten ausgebildet sind, sind thermisch und/oder schwingungstechnisch gegeneinander isoliert. Dadurch wird eine Wärmeübertragung in der Regenerationsphase an einer Sensoreinheit auf eine angrenzende Sensoreinheit und/oder eine Übertragung von Schwingungen zwischen benachbarten Sensoreinheiten vermieden. Zur Unterstützung der Anlagerung von Rußpartikeln im Bereich der Elektroden kann ein Schwingungserzeuger vorgesehen sein, der den Träger oder die einzelnen Trägerabschnitte mit mittelfrequenten mechanischen Schwingungen anregt.

Die Anlagerung von Rußpartikeln kann auch dadurch unterstützt werden, dass auf dem Träger zwischen den Elektroden Vertiefungen oder andere dreidimensionalen Oberflächenstrukturen ausgebildet sind.

Die Elektroden können gemäß einer besonders vorteilhaften Weiterbildung der Erfindung als Heizdrähte ausgebildet sein, so dass die Elektroden sowohl zur Messung als auch zur Durchführung der Regenerationsphase als Heizvorrichtung verwendet werden können. In der Regenerationsphase werden die Elektroden mit Gleichstrom beaufschlagt, während im Messbetrieb eine Wechselspannung zwischen den Elektroden anliegt. Dabei ist auch eine gleichzeitige Überlagerung der direkten Elektrodenheizung mittels beispielsweise kapazitiv eingekoppelter Signalmessung möglich. Dadurch kann die Regenerationsbeheizung bei Erreichen vorgegebener Zustandswerte abgebrochen werden und zeitnah ein neuer Rußmesszyklus beginnen.

Der Erfindung liegt die weitere Aufgabe zugrunde, eine Messanordnung mit wenigstens einem erfindungsgemäßen Sensor anzugeben, mit der eine Ermittlung der an dem Sensor angelagerten Rußmenge durchführbar ist.

Die Lösung dieser Aufgabe gelingt mit einer Messanordnung mit den Merkmalen des Anspruchs 8. Besonders vorteilhafte Weiterbildungen der Messanordnung sind in den Unteransprüchen 9 bis 11 offenbart.

Gemäß Anspruch 8 weist die Messanordnung eine Auswerteeinrichtung auf, die Messsignale der Sensoreinheiten zur Bestimmung der anliegenden Rußmenge separat misst und auswertet und die von den Sensoreinheiten gelieferten Sensorsignale zur Durchführung einer Systemüberwachung miteinander vergleicht. Der dabei durchgeführte Vergleich kann anhand von abgespeicherten Kennlinien oder abgespeicherten Referenzwerten durchgeführt werden. Die Auswerteeinrichtung kann anhand der durchgeführten Auswertung die angelagerte Rußmenge bestimmen und auch eine Eigendiagnose durchführen, um beispielsweise den Zeitpunkt zur Einleitung einer Regenerationsphase zu bestimmen. Durch die Auswertung der Sensorsignale kann aber auch festgestellt werden, ob einzelne Sensorbereiche einen Defekt aufweisen oder ob an einzelnen Sensorbereichen Störungen durch Anlagerung von elektrisch leitenden Fremdpartikeln, die keine Rußpartikel sind, festzustellen.

Die zeitliche Abfolge von regelmäßig durchführbaren Mess- und Regenerationsphasen kann eine Steuereinheit steuern, die in der Auswerteeinrichtung integriert sein kann.

Die Steuereinheit kann im Sensorbetrieb bzw. Messbetrieb die als Heizdrähte ausgebildeten Elektroden mit Wechselstrom, dagegen im Heizbetrieb zur Durchführung einer Regenerationsphase mit Gleichstrom beaufschlagen oder diese überlagern.

Die Erfindung wird nachfolgend anhand von in der Zeichnung dargestellten Ausführungsbeispielen näher erläutert.

Es zeigen:
- Fig. 1: eine Messanordnung mit einem Sensor zur Erfassung der Partikelkonzentration in einem Abgasstrom,
- Fig. 2: den zeitlichen Verlauf des Elektrodenstroms zwischen im unterschiedlichen Abstand angeordneten Elektroden,
- Fig. 3: eine Teil-Draufsicht auf einen Träger mit verschiedenen Elektrodengeometrien.

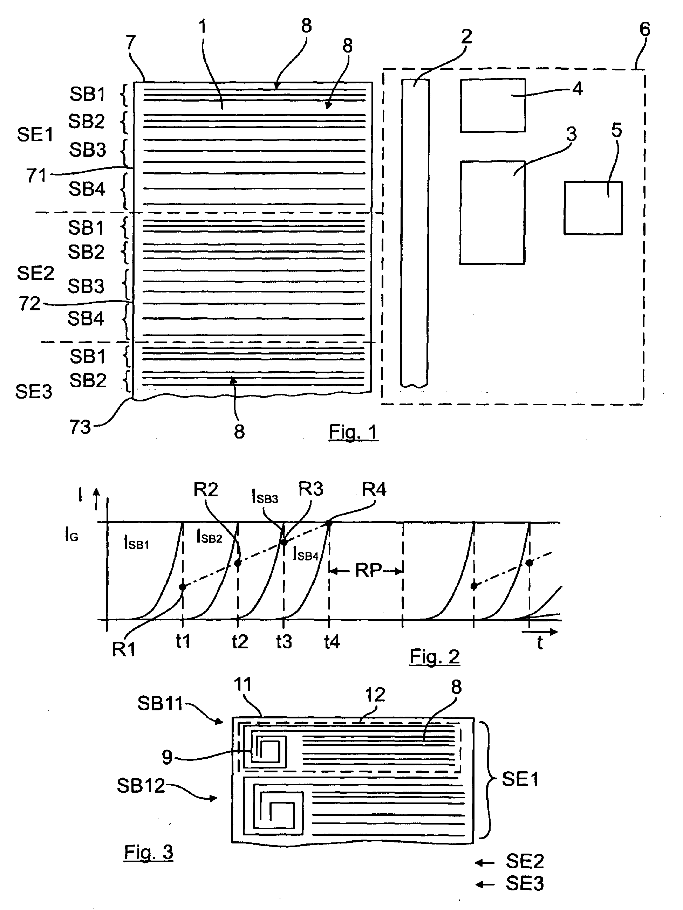

Die Messanordnung von Figur 1 besteht aus einem Sensor 1, einem Multiplexer 2, einer Steuerung 3, einem Speicher 4 und einer Anzeigeeinrichtung 5. Im dargestellten Ausführungsbeispiel bilden die Einrichtungen 2 bis 5 eine Auswerteeinrichtung 6, die die vom Sensor 1 erhaltenen Sensorsignale, die Messsignale darstellen, auswertet, um die auf dem Sensor 1 angelagerten Rußpartikel hinsichtlich ihrer Menge zu bestimmen.

Der Sensor 1 besteht aus einem Träger 7 aus nicht leitendem Material, beispielsweise aus einem Keramikmaterial, und aus einer Vielzahl von Elektroden 8, die in Figur 1 als waagrecht verlaufende Linien dargestellt sind. Der Träger 7 ist in Trägerabschnitte 71, 72, 73 unterteilt, was mittels unterbrochenen Linien angedeutet ist. Der Trägerabschnitt 73 ist dabei nur teilweise dargestellt. Auf jedem Trägerabschnitt 71 bis 73 sind vier unterschiedliche Sensorbereiche SB1 bis SB4 aufgebracht, die aus jeweils drei Elektroden 8 bestehen. Der Sensorbereich SB1 hat einen geringen Elektrodenabstand, der Sensorbereich SB2 hat einen größeren Elektrodenabstand, der SB3 hat einen nochmals größeren Elektrodenabstand und der Sensorbereich SB4 hat den größten Elektrodenabstand. Die auf dem Trägerabschnitt 71 angebrachten Sensorbereiche SB1 bis SB4 bilden zusammen mit dem Trägerabschnitt 71 eine Sensoreinheit SE1. In gleicher Weise bildet der Sensorabschnitt 72 und auch der Sensorabschnitt 73 jeweils eine Sensoreinheit SE2 und SE3, die zur Sensoreinheit SE1 identisch ausgebildet sind.

Die Ausführung eines erfindungsgemäßen Sensors 1 besitzt wenigstens drei Sensoreinheiten SE1 bis SE3, die im ordnungsgemäßen Zustand identische Sensorsignale über den Multiplexer 2 an die Steuerung 3 liefern. Die Steuerung 3, die als Mikroprozessor ausgebildet sein kann und die Teil der Auswerteeinrichtung 6 ist, kann die empfangenen Sensorsignale zur Bestimmung der angelagerten Rußpartikel auf dem Träger 7 auswerten. Dabei ist der Widerstandswert zwischen den Elektroden eines Sensorbereichs ein Maß für die darauf anliegende Menge von Rußpartikeln. Im normalen Messbetrieb sind die Sensorsignale von den jeweils gleichartigen Sensorbereichen zumindest weitgehend identisch. Tritt jedoch an einem Sensorbereich, beispielsweise am Sensorbereich SB1 des Trägerabschnitts 71 eine Störung auf, so erkennt dies die Auswerteeinrichtung 6 daran, dass dessen Sensorsignal von den Sensorsignalen der anderen gleichartigen Sensorbereiche SB1 zu stark abweicht. Die Auswerteeinrichtung 6 kann daraufhin den fehlerhaften Sensorbereich, zum Beispiel SB1 von Trägerabschnitt 71, als defekt erkennen und ihn bei der weiteren Auswertung zur Bestimmung der am Sensor 1 anliegenden Rußmenge unberücksichtigt lassen.

Zu starke Abweichungen, die auf einen Defekt oder sonstigen Fehler schließen lassen, kann die Auswerteeinrichtung 6 dadurch erkennen, dass die gemessenen Werte von den sonstigen gemessenen Werte zu stark abweichen oder von in einem Speicher 4 abgespeicherten Referenzwerten zu stark abweichen.

Sowohl die gemessene Rußmenge als auch festgestellte Defekte oder Störungen können an einer Anzeigeeinrichtung 5 dargestellt und gegebenenfalls auch abgespeichert werden.

Die Trägerabschnitte 71, 72, 73 können separat mittels einer rückseitig oder integriert im Träger 7 angeordneten Heizvorrichtung in zeitlichen Abständen innerhalb einer Regenerationsphase regeneriert werden, d. h. die anliegenden Rußpartikel werden durch Hitzeeinwirkung verbrannt und mit dem Abgasstrom abgetragen. Damit die einzelnen Sensoreinheiten SE1 bis SE3 einzeln regeneriert werden können, während die übrigen Sensoreinheiten weiterhin im Messbetrieb arbeiten, besitzt jeder Trägerabschnitt 71 bis 73 eine eigene Heizvorrichtung. Im einfachsten Fall kann die Heizvorrichtung unmittelbar durch die Elektroden 8 gebildet werden, wenn diese als Heizdrähte ausgebildet sind und in der Regenerationsphase mit einem Gleichstrom beaufschlagt werden.

In Figur 2 ist der zeitabhängige Stromverlauf im Bereich der unterschiedlichen Sensorbereiche SB1 bis SB4 dargestellt. Außerdem ist als strichpunktierte Linie die jeweils zugehörige Rußmenge eingetragen, die hier linear mit der Zeit t zunimmt.

Da die Elektroden des Sensorbereichs SB1 am engsten nebeneinander liegen, ergibt sich bereits bei geringen Rußanlagerungen zwischen den Elektroden 8 ein Anstieg des Stroms I_{SB1}. Dabei repräsentiert der dargestellte Stromwert I_{G} zwischen den Elektroden des Sensorbereichs SB1 einen Rußwert R₁ für die auf dem Sensor 1 von Figur 1 anliegende Rußmenge. Im weiteren zeitlichen Verlauf strömt weiteres Abgas am Sensor entlang, so dass zum Zeitpunkt t₂ am Sensorbereich SB2 der Grenzwert I_{G} erreicht wird. Am Sensorbereich SB2 repräsentiert der Stromwert I_{G} einen Rußwert R₂, der nun die auf dem Sensor 1 von Figur 1 anliegende Rußmenge repräsentiert. In gleicher Weise verhält sich dies mit den ermittelten Rußwerten R₃ und R₄ zu den Zeitpunkten t₃ und t₄.

Zum Zeitpunkt t₄ wird eine Regenerationsphase RP eingeleitet, während der wenigstens eine Sensoreinheit SE1 bis SE3 regeneriert wird.

Nach Ablauf der Regenerationsphase RP erfolgt ein neuer Messzyklus an dem regenerierten Sensorbereich, wobei sich bei unverändertem Abgasstrom gleiche Stromverläufe und Messergebnisse für die gemessenen Rußmengen ergeben.

Figur 3 zeigt die Draufsicht auf einen Sensor 11, dessen Sensorbereiche SB11, SB12 Elektroden 8, 9 mit unterschiedlichen geometrischen Verläufen haben. Die Darstellung von Figur 3 soll zeigen, dass nicht ausschließlich geradlinige Elektroden 8, wie bei Figur 1 verwendet werden können, sondern dass grundsätzlich unterschiedliche Elektrodengeometrien möglich sind. Wesentlich ist jedoch, dass der Sensor 11 ebenfalls in wenigstens drei identische Sensoreinheiten SE1 bis SE3 unterteilt ist, die identisch ausgeführt sind, wie die einzige in Figur 3 dargestellte Sensoreinheit SE1.

Eine Regenerationsseinrichtung 12 zur Erzeugung niederfrequenter mechanischer Schwingungen und/oder mit einer Heizvorrichtung ist beispielhaft mit unterbrochener Linie in Figur 3 angedeutet. Um angelagerte Rußpartikel oder andere nicht veraschbare Partikel "abschütteln" zu können kann als Schwingungseinrichtung ein piezoelektrisches Element rückseitig am Sensor 11 angeordnet sein, das mittels Wechselstrom in Schwingung versetzt werden kann.

### Bezugszeichenliste

- 1: Sensor
- 2: Multiplexer
- 3: Steuerung
- 4: Speicher
- 5: Anzeigeeinrichtung
- 6: Auswerteeinrichtung
- 7: Träger
- 71: Trägerabschnitt
- 72: Trägerabschnitt
- 73: Trägerabschnitt
- 8: Elektroden
- 9: Elektroden
- 11: Sensor
- 12: Regenerationseinrichtung
- R: Rußwert
- SE1: Sensoreinheit
- SE2: Sensoreinheit
- SE3: Sensoreinheit
- SB1: Sensorbereich
- SB2: Sensorbereich
- SB3: Sensorbereich
- SB4: Sensorbereich
- I_{G}: Stromwert/Grenzwert
- t: Zeitpunkt
- RP: Regenrationsphase

## Patentansprüche

1. Sensor zur Erfassung der Partikelkonzentration, insbesondere der Konzentration der Rußpartikel, im Abgasstrom einer Brennkraftmaschine, insbesondere eines Kraftfahrzeugs, der unterschiedliche auf einem Träger (7) angeordnete Sensorbereiche (SB1 bis SB4) mit jeweils unterschiedlich angeordneten Elektroden (8) aufweist, **dadurch gekennzeichnet, dass** der Sensor (1) wenigstens drei identisch ausgebildete Sensoreinheiten (SE1 bis SE3) umfasst, die dazu eingerichtet sind im ordnungsgemäßen Zustand zumindest weitgehend identische Sensorsignale über einen Mulitplexer (2) an eine Steuerung (3) zu liefern und dass jede Sensoreinheit (SE1 bis SE3) durch wenigstens zwei unterschiedliche Sensorbereiche (SB1 bis SB4), deren Elektroden (8) unterschiedliche Elektrodenabstände aufweisen, gebildet ist, wobei jede Sensoreinheit (SE1 bis SE3) auf einem Trägerabschnitt (71 bis 73) des Trägers (7) angeordnet ist, und dass jeder Trägerabschnitt (71 bis 73) eine separat aktivierbare Regenerationseinrichtung zur Regeneration der auf ihm angeordneten Sensoreinheit (SE1; SE2; SE3) aufweist und die Trägerabschnitte (71 bis 73) gegeneinander thermisch und/oder schwingungstechnisch isoliert sind.

2. Sensor nach Anspruch 1, **dadurch gekennzeichnet, dass** die Regenerationseinrichtung als Heizvorrichtung ausgebildet ist.

3. Sensor nach einem der Ansprüche 1 oder 2, **dadurch gekennzeichnet, dass** die Regenerationseinrichtung eine Schwingungseinrichtung zur Erzeugung niederfrequenter mechanischer Schwingungen umfasst.

4. Sensor nach einem der Ansprüche 1 bis 3, **dadurch gekennzeichnet, dass** die Regenerationseinrichtung eine Hochspannungseinrichtung zur Erzeugung hoher Spannungen zwischen den Elektroden (8) der Sensoreinheiten (SE1 bis SE3) umfasst.

5. Sensor nach einem der vorhergehenden Ansprüche, **dadurch gekennzeichnet, dass** der Träger (7) oder einzelne Trägerabschnitte (71; 72; 73) jeweils mit einem Schwingungserzeuger, der dazu eingerichtet ist mittelfrequente mechanische Schwingungen zu erzeugen gekoppelt ist.

6. Sensor nach einem der vorhergehenden Ansprüche, **dadurch gekennzeichnet, dass** zwischen den auf dem Träger (7) angeordneten Elektroden (8) Vertiefungen ausgebildet sind.

7. Sensor nach einem der vorhergehenden Ansprüche, **dadurch gekennzeichnet, dass** die Elektroden (8) als Heizdrähte ausgebildet sind und zur Regeneration des Sensors (1) oder dessen Sensoreinheiten (SE1 bis SE3) als Regenerationseinrichtung geeignet sind

8. Messanordnung mit wenigstens einem Sensor (1, 11) nach einem der vorhergehenden Ansprüche, die eine Auswerteeinrichtung (6) dazu eingerichtet ist zur Ermittlung der an dem Sensor (1, 11) angeordneten Rußmenge aufweist, **dadurch gekennzeichnet, dass** die Auswerteeinrichtung (6) die Messsignale der Sensoreinheiten (SE1 bis SE3) zur Bestimmung der an ihnen anliegenden Rußmenge separat zu messen und auszuwerten, und dass die Auswerteeinrichtung (6) dazu eingerichtet ist die von den Sensoreinheiten (SE1 bis SE3) gelieferten Messsignale zur Durchführung einer Systemüberwachung miteinander zu vergleichen wobei die Steuereinheit (3) dazu eingerichtet ist eine zeitliche Abfolge von Mess- und Regenerationsphasen zu steuern und die Steuereinheit (3) dazu eingerichtet ist die Elektroden (8) im Sensorbetrieb mit Wechselstrom, dagegen im Heizbetrieb zur Regeneration eines Sensorbereichs (SB1 bis SB4) oder einer Sensoreinheit (SE1 bis SE3) mit Gleichstrom zu beaufschlagen.

9. Messanordnung nach Anspruch 8, **dadurch gekennzeichnet, dass** die Sensorbereiche (SB1 bis SB4) der Sensoreinheiten (SE1 bis SE3) über einen Multiplexer (2) an die Auswerteeinrichtung (6) zur Auswertung der Sensorsignale angeschlossen sind.

10. Messanordnung nach einem der Ansprüche 8 oder 9, **dadurch gekennzeichnet, dass** zwischen Auswerteeinrichtung (6) und den Elektroden (8) zur Übertragung der Messsignale eine kapazitive oder in anderer Weise galvanisch entkoppelte Signalverbindung besteht.

11. Fahrzeug, insbesondere Nutzfahrzeug mit einem Sensor nach einem der Ansprüche 1 bis 7 oder mit einer Messanordnung nach einem der Ansprüche 8 bis 10.

## Claims

1. A sensor for detecting the particle concentration, in particular the concentration of soot particles, in the exhaust stream of an internal combustion engine, in particular a motor vehicle, which sensor has different sensor regions (SB1 to SB4) which are arranged on a carrier (7) and each have differently arranged electrodes (8), **characterized in that in that** the sensor (1) comprises at least three sensor units (SE1 to SE3) which are of identical design and which are configured, in a satisfactory state, to supply at least largely identical sensor signals to a controller (3) via a multiplexer (2), and **in that** each sensor unit (SE1 to SE3) is formed by at least two different sensor regions (SB1 to SB4) whose electrodes (8) have different electrode distances, wherein each sensor unit (SE1 to SE3) is arranged on a carrier section (71 to 73) of the carrier (7), and **in that** each carrier section (71 to 73) has a separately actuable regeneration device for regenerating the sensor unit (SE1; SE2; SE3) which is arranged on it, and the carrier sections (71 to 73) are insulated from one another thermally and/or in terms of vibration.

2. The sensor according to Claim 1, **characterized in that in that** the regeneration device is embodied as a heating device.

3. The sensor according to one of Claims 1 or 2, **characterized in that in that** the regeneration device comprises a vibration device for generating low-frequency mechanical vibrations.

4. The sensor according to one of Claims 1 to 3, **characterized in that in that** the regeneration device comprises a high-voltage device for generating high voltages between the electrodes (8) of the sensor units (SE1 to SE3).

5. The sensor according to one of the preceding claims, **characterized in that in that** the carrier (7) or individual carrier sections (71; 72; 73) are each coupled to a vibration generator which is configured to generate medium-frequency mechanical vibrations.

6. The sensor according to one of the preceding claims, **characterized in that** depressions are formed between the electrodes (8) which are arranged on the carrier (7).

7. The sensor according to one of the preceding claims, **characterized in that** the electrodes (8) are embodied as hot wires and are suitable for regenerating the sensor (1) or the sensor units (SE1 to SE3) thereof as a regeneration device.

8. A measuring arrangement having at least one sensor (1, 11) according to one of the preceding claims, which measuring arrangement has an evaluation device (6) which is configured to determine the quantity of soot arranged on the sensor (1, 11), **characterized in that** the evaluation device (6) is configured to measure and evaluate separately the measurement signals of the sensor units (SE1 to SE3) in order to determine the quantity of soot present on them, and **in that** the evaluation device (6) is configured to compare the measurement signals supplied by the sensor units (SE1 to SE3) with one another in order to carry out signal monitoring, and wherein the control unit (3) is configured to control a chronological sequence of measurement and regeneration phases, and the control unit (3) is configured to apply alternating current to the electrodes (8) in the sensor mode and, in contrast, to apply direct current thereto in the heating mode in order to regenerate a sensor region (SB1 to SB4) or a sensor unit (SE1 to SE3).

9. The measuring arrangement according to Claim 8, **characterized in that** the sensor regions (SB1 to SB4) of the sensor units (SE1 to SE3) are connected to the evaluation device (6) by a multiplexer (2) in order to evaluate the sensor signals.

10. The measuring arrangement according to one of Claims 8 or 9, **characterized in that** a signal connection which is capacitive, or is galvanically isolated in some other way, is present between the evaluation device (6) and the electrodes (8) for transmission of the measurement signals.

11. The vehicle, in particular utility vehicle, having a sensor according to one of Claims 1 to 7 or having a measuring arrangement according to one of Claims 8 to 10.

## Revendications

1. Capteur destiné à détecter la concentration de particules, notamment la concentration de particules de suie, dans le courant des gaz d'échappement d'un moteur à combustion interne, notamment d'un véhicule automobile, lequel possède différentes zones de détection (SB1 à SB4) disposées sur un support (7) et comportant respectivement des électrodes disposées différemment (8), **caractérisé en ce que** le capteur (1) comprend au moins trois unités de détection (SE1 à SE3) configurées à l'identique, lesquelles sont conçues pour délivrer, dans un état conforme à leur destination, des signaux de détecteur au moins largement identiques à une commande (3) par le biais d'un multiplexeur (2), et **en ce que** chaque unité de détection (SE1 à SE3) est formée par au moins deux zones de détection (SB1 à SB4) différentes dont les électrodes (8) présentent des écarts entre électrodes différents, chaque unité de détection (SE1 à SE3) étant montée sur une portion de support (71 à 73) du support (7), et **en ce que** chaque portion de support (71 à 73) possède un dispositif de régénération activable séparément pour régénérer l'unité de détection (SE1 ; SE2 ; SE3) montée sur celle-ci et les portions de support (71 à 73) sont isolées les unes des autres sur le plan thermique et/ou oscillatoire.

2. Capteur selon la revendication 1, **caractérisé en ce que** le dispositif de régénération est réalisé sous la forme d'un système de chauffage.

3. Capteur selon l'une des revendications 1 ou 2, **caractérisé en ce que** le dispositif de régénération comprend un dispositif oscillant destiné à générer des oscillations mécaniques à basse fréquence.

4. Capteur selon l'une des revendications 1 à 3, **caractérisé en ce que** le dispositif de régénération comprend un dispositif à haute tension destiné à générer des tensions élevées entre les électrodes (8) des unités de détection (SE1 à SE3).

5. Capteur selon l'une des revendications précédentes, **caractérisé en ce que** le support (7) ou des portions de support (71 ; 72 ; 73) indépendantes sont respectivement couplés avec un générateur d'oscillations qui est conçu pour générer des oscillations mécaniques à moyenne fréquence.

6. Capteur selon l'une des revendications précédentes, **caractérisé en ce que** des cavités sont formées entre les électrodes (8) montées sur le support (7) .

7. Capteur selon l'une des revendications précédentes, **caractérisé en ce que** les électrodes (8) sont réalisées sous la forme de fils chauffants et conviennent en tant que dispositif de régénération pour la régénération du capteur (1) ou de ses unités de détection (SE1 à SE3).

8. Arrangement de mesure comprenant au moins un capteur (1, 11) selon l'une des revendications précédentes, lequel possède un dispositif d'interprétation (6) qui est conçu pour déterminer une quantité de suie déposée sur le capteur (1, 11), **caractérisé en ce que** le dispositif d'interprétation (6) est conçu pour mesurer et interpréter séparément les signaux de mesure des unités de détection (SE1 à SE3) en vue de déterminer la quantité de suie reposant sur celles-ci et **en ce que** le dispositif d'interprétation (6) est conçu pour comparer entre eux les signaux de mesure délivrés par les unités de détection (SE1 à SE3) en vue de réaliser une surveillance du système, l'unité de commande (3) étant conçue pour commander une séquence chronologique de phases de mesure et de régénération et l'unité de commande (3) étant conçue pour alimenter les électrodes (8) avec du courant alternatif en mode de détection et par contre avec du courant continu en mode de chauffage en vue de la régénération d'une zone de détection (SB1 à SB4) ou d'une unité de détection (SE1 à SE3).

9. Arrangement de mesure selon la revendication 8, **caractérisé en ce que** les zones de détection (SB1 à SB4) des unités de détection (SE1 à SE3) sont raccordées par le biais d'un multiplexeur (2) au dispositif d'interprétation (6) en vue de l'interprétation des signaux de détecteur.

10. Arrangement de mesure selon l'une des revendications 8 à 9, **caractérisé en ce qu'**entre le dispositif d'interprétation (6) et les électrodes (8), il existe une liaison de signal capacitive ou découplée galvaniquement d'une autre manière pour la transmission des signaux de mesure.

11. Véhicule, notamment véhicule utilitaire, équipé d'un capteur selon l'une des revendications 1 à 7 ou d'un arrangement de mesure selon l'une des revendications 8 à 10.
